(19) Europäisches Patentamt
European Patent Office
Office européen des brevets

(11) EP 4 711 333 A1

(12) EUROPEAN PATENT APPLICATION
published in accordance with Art. 153(4) EPC

(43) Date of publication:
**18.03.2026 Bulletin 2026/12**

(21) Application number: **24803633.7**

(22) Date of filing: **30.04.2024**

(51) International Patent Classification (IPC):
***C01B 32/372*** *(2017.01)* ***C01B 32/318*** *(2017.01)*
***C01B 32/33*** *(2017.01)* ***C01B 33/035*** *(2006.01)*
***H01M 4/36*** *(2006.01)* ***H01M 4/38*** *(2006.01)*
***H01M 4/587*** *(2010.01)* ***H01M 4/62*** *(2006.01)*

(52) Cooperative Patent Classification (CPC):
Y02E 60/10

(86) International application number:
**PCT/KR2024/005837**

(87) International publication number:
**WO 2024/232579 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2023 KR 20230059237**
**26.12.2023 KR 20230191215**

(71) Applicant: **OCI Company Ltd.**
**Seoul 04532 (KR)**

(72) Inventors:
- **KANG, Seung Yeon**
**Seongnam-si Gyeonggi-do 13212 (KR)**
- **JEONG, Eunhye**
**Seongnam-si Gyeonggi-do 13212 (KR)**
- **NOH, Minho**
**Seongnam-si Gyeonggi-do 13212 (KR)**
- **LEE, Namjin**
**Seongnam-si Gyeonggi-do 13212 (KR)**
- **CHANG, Joonhyun**
**Seongnam-si Gyeonggi-do 13212 (KR)**
- **CHO, Yongjae**
**Seongnam-si Gyeonggi-do 13212 (KR)**
- **CHI, Eunok**
**Seongnam-si Gyeonggi-do 13212 (KR)**

(74) Representative: **Zacco Sweden AB**
**P.O. Box 5581**
**Löjtnantsgatan 21**
**114 85 Stockholm (SE)**

# (54) SILICON-CARBON COMPOSITE FOR SECONDARY BATTERY ANODE MATERIAL, AND METHOD FOR MANUFACTURING SAME

(57) The present invention relates to a silicon-carbon composite for an anode material of a secondary battery and a method for manufacturing same and, more specifically, to a silicon-carbon composite for an anode material of a secondary battery and a method for manufacturing same, wherein when applied as an anode material, the silicon-carbon composite is capable of improving characteristics of a secondary battery by minimizing a volume change of silicon particles during charging and discharging processes of the secondary battery.

FIG. 1

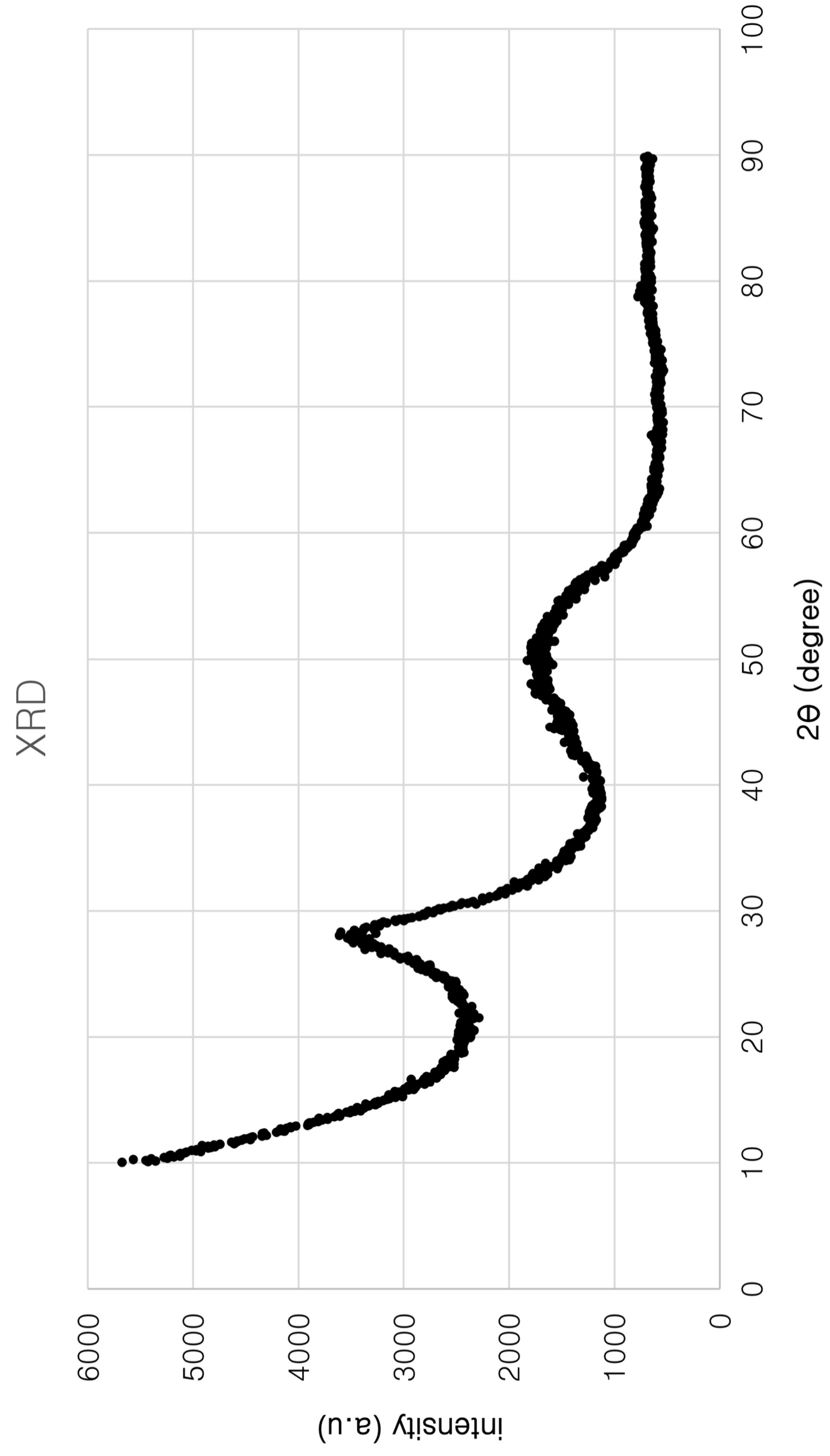
XRD
intensity (a.u)
6000
5000
4000
3000
2000
1000
0
0
10
20
30
40
50
60
70
80
90
100
2θ (degree)

## Description

### FIELD

The present disclosure relates to a silicon-carbon composite for a negative-electrode material of a secondary battery and a method for preparing the same, and more particularly, to a silicon-carbon composite for a negative-electrode material of a secondary battery, which minimizes a change in volume of silicon particles during a charging/discharging process of the secondary battery so as to improve the characteristics of the secondary battery when being applied as the negative-electrode material, and a method for preparing the same.

### DESCRIPTION OF RELATED ART

The performance improvement of the secondary battery is based on a positive-electrode material, a negative-electrode material, and electrolyte as components of thereof.

A graphite-based material mainly used as the negative-electrode material among the above components is commercially available due to excellent electrochemical performance and low cost. However, since the theoretical capacity thereof is limited to 370 mAh/g, there is a limitation to application thereof to high-capacity secondary batteries.

In order to overcome the above limitation, a non-graphite-based negative-electrode material such as silicon, tin, and germanium has emerged as an alternative material thereto. Among them, silicon has a theoretical capacity of 4000 to 4200 mAh/g, can store therein a very large amount of lithium per unit weight, and exhibits a high capacity of almost 10 times or greater compared to the graphite, and thus has been spotlighted as a material for replacing the graphite. However, compared to the high theoretical capacity of silicon, a large volume expansion of about 400% of silicon occurs during the charging and discharging process, thereby causing problems such as silicon particles being broken and ground, reduction of electron conductivity with a carbon additive and the current collector, eventually leading to loss of capacity of the secondary battery and reduction of a cycle life thereof.

A scheme for alleviating the volume expansion of silicon includes a scheme for controlling the property of silicon particles and a scheme for preparing a silicon-carbon composite by mixing a carbon-based material with the silicon particles have been devised. An important task is to improve the performance of the secondary battery by applying the silicon-carbon composite as a negative-electrode material for a secondary battery.

### DISCLOSURE

### TECHNICAL PURPOSE

A purpose of the present disclosure is to provide a silicon-carbon composite as a negative-electrode material for a secondary battery, which can improve initial discharge capacity, initial efficiency, and lifespan of the secondary battery when being applied as the negative-electrode material for the secondary battery, and a method for preparing the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

In order to achieve the above purpose, according to a first aspect of the present disclosure,

a silicon-carbon composite may be provided,
wherein the silicon-carbon composite comprises silicon particles and a porous carbon structure,
wherein each of the silicon particles may be present in an amorphous phase or in an amorphous-crystalline mixed phase,
wherein an average grain size of the crystalline silicon particles may be 10nm or smaller,
wherein the porous carbon structure may contain micropores, mesopores, and macropores defined therein,
wherein the micropores may be contained in an amount of 10 to 30 vol%, based on 100 vol% of a total pore volume of the porous carbon structure, wherein the mesopores may be contained in an amount of 20 to 40 vol%, based on 100 vol% of a total pore volume of the porous carbon structure, wherein the macropores may be contained in an amount of 40 to 60 vol%, based on 100 vol% of a total pore volume of the porous carbon structure.

A total porosity of the porous carbon structure may be in a range of 0.6 to 1.5 $cm^3/g$.

A specific surface area of the porous carbon structure may be in a range of 200 to 1,000 $m^2/g$.

The silicon particles may have an average particle size of 1 to 100nm, wherein the silicon-carbon composite particles may have an average particle size of 4 to 8$\mu$m.

The porous carbon structure may be made of carbon black or a mixture of carbon black and a binder.

The binder may include at least one of a phenolic resin, a coal tar pitch, or a polyacrylonitrile.

The porous carbon structure may be made of the mixture of the carbon black and the binder, wherein when a total weight of the mixture is 100% by weight, the carbon black may be contained in an amount of 40 to 70% by weight, and the binder may be contained in an amount of 30 to 60% by weight.

A coating layer made of a carbon-based coating material may be formed on a surface of the silicon-carbon composite.

When a total weight of the silicon-carbon composite is 100 wt%, a content of the silicon particles contained in the silicon-carbon composite may be in a range of 40 to 80 wt%.

The silicon-carbon composite may satisfy that a span value expressed based on a following Equation 1 is in a range of 0.8 to 1.2:

$$\text{<Equation 1> Span} = (D_{90}-D_{10})/D_{50}.$$

According to the second aspect of the present disclosure, there is provided a negative-electrode material for a secondary battery, the negative-electrode material comprising the silicon-carbon composite according to the first aspect of the present disclosure.

According to the third aspect of the present disclosure, a method for preparing the silicon-carbon composite according to the first aspect of the present disclosure may be provided,
the method comprising:

(a) placing a porous carbon structure into a chemical vapor deposition (CVD) reactor;
(b) supplying silicon-source gas to the CVD reactor, and reacting the silicon-source gas with the porous carbon structure under an atmospheric pressure and a temperature of 400°C to 550°C, thereby depositing silicon particles on the porous carbon structure; and
(c) precipitating a resultant product of the (b) into a solid form to obtain the silicon-carbon composite.

The (a) may be performed under a carrier gas atmosphere.

The carrier gas may include at least one of nitrogen gas or argon gas.

Hydrogen ($H_2$) gas may be further input to the CVD reactor in the (a).

The silicon-source gas may include at least one selected from a group consisting of monosilane ($SiH_4$) gas, disilane ($Si_2H_6$) gas, monochlorosilane ($SiH_3Cl$) gas, dichlorosilane ($SiH_2Cl_2$) gas, trichlorosilane ($SiHCl_3$) gas, and trimethylsilane ($SiH(CH_3)_3$) gas.

The method may further comprise, after the (c), (d) forming a coating layer made of a carbon-based coating material on a surface of the obtained silicon-carbon composite.

The (d) may be performed using one of: coating using chemical vapor deposition (CVD); coating using solution infiltration and subsequent solvent evaporation; coating using solution infiltration and subsequent solvent evaporation and annealing; coating using a sol-gel process; coating using vapor infiltration; coating using melt infiltration; and coating using atomic deposition.

In the (d), the carbon-based coating layer may be formed in a chemical vapor deposition (CVD) process using a carbon source gas including at least one selected from a group consisting of methane gas, ethane gas, propane gas, butane gas, acetylene gas, and ethylene gas.

## TECHNICAL EFFECT

In accordance with the present disclosure, the particle size of the silicon particles adjusted to prevent silicon cracks and minimize volume expansion thereof even during charging and discharging of the secondary battery may be provided.

In accordance with the present disclosure, the porous carbon structure having a void space capable of accommodating the volume expansion of silicon, and also having a pore volume distribution so that silicon can grow in preparing the silicon-carbon composite may be provided.

In accordance with the present disclosure, a novel silicon-carbon composite made of the silicon particles and the porous carbon structure may be provided.

Due to the excellent characteristics of the silicon-carbon composite of the present disclosure, initial discharge capacity, initial efficiency, and lifetime characteristics of the secondary battery manufactured so as to include the composite as the negative-electrode material may be improved.

In addition to the above-described effects, the effects of the present disclosure will be described together while describing matters for implementing the present disclosure.

## BRIEF DESCRIPTION OF DRAWINGS

FIG. 1 is a graph showing a result of X-ray diffraction analysis of a silicon-carbon composite of Present Example 1 performed according to Experimental Example 1 of the present disclosure.

FIG. 2 is a graph illustrating a discharge capacity measured in a 20-cycles experiment performed according to Experimental Example 2 of the present disclosure.

FIG. 3 is a graph illustrating efficiency measured in a 20-cycles experiment performed according to Experimental Example 2 of the present disclosure.

FIG. 4 is a graph illustrating a capacity retention rate measured in a 20-cycles experiment performed according to Experimental Example 2 of the present disclosure.

## DETAILED DESCRIPTIONS

The above-described objects, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

In the present disclosure, when "includes", "has", "is made", "is disposed", "has", or the like are used, other parts may be added unless "only" is used. The expression of a component in a singular manner includes a plurally thereof unless otherwise specified.

In the present disclosure, a micropore means that the average size of a pore is 2 nm or smaller, a mesopore means that the average size of the pore is in a range of 2 nm exclusive to 50nm inclusive, and a macropore means that the average size of the pore is in a range of 50nm exclusive to 100nm inclusive.

In the present disclosure, the particle size measurement is performed in the Particle size analyzer (PSA) manner, and the particle size is calculated based on the distribution of the scattering angle of the light scattered while the light is passing through the powder sample as the sample to be measured, and the measurement equipment was LS 13 320 Particle Size Analyzer (Beckman Coupler).

In the present disclosure, the average particle size of silicon in the silicon-carbon composite is measured through SEM (JSM-7100F) or TEM (JEM-2100F) analysis, and the sizes of silicon particles in at least 9 spots are measured, and then the average value thereof is calculated.

In the present disclosure, "crystal grain" refers to a crystal or a crystallite, and refers to "an area of a material in which atoms are aligned and arranged in a repetitive pattern."

In the present disclosure, the grain size is measured through XRD (equipment name: panalytical-x'pert pro) analysis, and the grain size automatically derived through Scherer equation based on XRD data measured in the equipment is used.

In the present disclosure, a specific surface area was measured in the BET manner (nitrogen adsorption/desorption manner).

In the present disclosure, the porosity of each of the micropores and the mesopores was measured in a Brunauer-Emmett-Teller (BET) manner (nitrogen absorption/desorption manner), and the porosity of the macropores was measured in a mercury porosimetry manner.

In the present disclosure, in interpreting a numerical value, it is interpreted as including an error range even when there is no separate explicit description.

Hereinafter, the present disclosure will be described in more detail.

A silicon-carbon composite of the present disclosure comprises silicon particles and a porous carbon structure, wherein the average particle size of the silicon particles may be in a range of 1 to 100nm, wherein each of the silicon particles may be present in an amorphous phase or in an amorphous-crystalline mixed phase, wherein an average grain size of the crystalline silicon particles may be 10nm or smaller, wherein the porous carbon structure contains micropores, mesopores, and macropores defined therein, wherein the average particle size of the silicon-carbon composite particles may be in a range of 4 to 8$\mu$m.

As a result of the study in the present disclosure, it was identified that when the amorphous silicon particles are included in the silicon-carbon composite or when the mixture of the crystalline silicon particles and the amorphous silicon particles are included in the silicon-carbon composite, and the crystalline silicon particles have an average grain size of 10nm or smaller, the silicon-carbon composite is applied as the negative-electrode material, such that the surface of the silicon particles is prevented from being broken during discharge of the secondary battery, thereby solving the problem of deterioration in the performance of the secondary battery.

When the average particle size of the silicon particles as the nanoparticles exceeds 100nm, there may be a problem in that the surface of the silicon particles is broken during charging and discharging of the secondary battery and thus the performance is deteriorated.

In addition, when the average particle size of the silicon-carbon composite particles is out of 4 to 8 $\mu$m, there may be a problem in that a process of adjusting the particle size through an additional spheronization process or a grinding process is required.

The porous carbon structure of the present disclosure has a pore volume including micropores, mesopores, and macropores, thereby providing a void space for accommodating the expansion of silicon during the charging and discharging of a secondary battery, thereby contributing to the reduction in the expansion of the silicon-carbon composite. It also provides a nucleation site in which silicon can grow, which may be advantageous in obtaining silicon of the size and shape desired in the present disclosure.

According to an embodiment of the present disclosure, the micropores may be contained in an amount of 10 to 30 vol%, based on 100 vol% of a total pore volume of the porous carbon structure. The mesopores may be contained in an amount of 20 to 40 vol%, based on 100 vol% of a total pore volume of the porous carbon structure. The macropores may be contained in an amount of 40 to 60 vol%, based on 100 vol% of a total pore volume of the porous carbon structure. When the porous carbon structure of the present disclosure satisfies the above pore distribution, silicon may be evenly impregnated into the porous carbon structure, and thus silicon expansion may be efficiently controlled during the charging process of the secondary battery, and a lifetime retention rate may be high.

According to an embodiment of the present disclosure, the porous carbon structure may be made of carbon black or a mixture of carbon black and a binder.

When the binder is mixed with the carbon black in the preparing of the porous carbon structure, the binder allows the carbon blacks to be agglomerated with each other, and the binder allows the density of the porous carbon structure to be high. In addition, pore distribution may be controlled by adjusting a ratio of the contents of the carbon black and the binder.

In this regard, the porous carbon structure is made of a mixture of the carbon black and the binder according to an embodiment of the present disclosure. In this case, when the total weight of the mixture is 100 wt%, the carbon black may be contained in an amount of 40 to 70 wt%, and the binder may be contained in an amount of 30 to 60 wt%. More preferably, when the total weight of the mixture is 100 wt%, the carbon black may be contained in an amount of 50 to 65 wt%, and the binder may be contained in an amount of 35 to 50 % by weight.

As will be described below, when the porous carbon structure is prepared, carbonization is performed. In the carbonization, the carbon present in the binder remains in the form of amorphous carbon, and other elements present in the binder are eliminated in the carbonization process.

According to an embodiment of the present disclosure, the carbon black may be selected from furnace black and acetylene black.

According to an embodiment of the present disclosure, the binder may include at least one of a phenolic resin, a coal tar pitch, or polyacrylonitrile.

A method for preparing a porous carbon structure according to the present disclosure schematically includes a heat treatment step and an activation step of carbon black, and may be classified into the following two methods depending on whether the activation process is before or after the heat treatment.

A first method for preparing a porous carbon structure according to the present disclosure is a post-activation method in which the activation step is performed after the heat treatment, and may include following steps.

(a-1) mixing carbon black and a binder with each other in a solvent;
(a-2) spray-drying the mixture of the (a-1) such that the mixture is spheroidized;
(a-3) carbonizing a resultant product of the (a-2) at 900 to 1100°C; and
(a-4) performing steam activation of a resultant product of the (a-3) at 900 to 1000°C.

A second method for preparing the porous carbon structure according to the present disclosure is a pre-activation method in which the activation step is treated prior to the heat treatment, and may include following steps.

(b-1) performing steam activation of carbon black in a form of pellets at 900 to 1000°C;
(b-2) disintegrating the carbon black as the resultant product of the (b-1) and then mixing the carbon black with the binder in a solvent;
(b-3) spray-drying the mixture of the (b-2) such that the mixture is spheroidized; and
(b-4) carbonizing a resultant product of the (b-3) at 900 to 1100°C.

The content of each of the carbon black and the binder in the first method or the second method is the same as that described above.

According to an embodiment of the present disclosure, a total porosity of the porous carbon structure may be in a range of 0.6 to 1.5 $cm^3/g$, and the specific surface area of the porous carbon structure may be in a range of 200 to 1,000 $m^2/g$. By using the porous carbon structure satisfying the above ranges of the total porosity and the specific surface area, the desired effect of the present disclosure may be achieved.

Specifically, when the total porosity of the porous carbon structure is too low, a buffering role for accommodating the silicon expansion during the charging and discharging of a secondary battery may not be provided. Thus, there may be a problem in that the lifespan of the secondary battery may be reduced when the silicon-carbon composition including the same is applied as the negative-electrode material for the secondary battery.

On the contrary, when the total porosity of the porous carbon structure is too high, the specific surface area thereof is excessively increased. Thus, the charge/discharge efficiency of the secondary battery may be lowered when the silicon-carbon composition including the same is applied as the negative-electrode material for the secondary battery. In this regard, the total porosity of the porous carbon structure of the present disclosure may be, for example, in a range of 0.6 to 1.5 $cm^3/g$, for example, 0.7 to 1.2 $cm^3/g$.

The total porosity refers to a sum of a porosity of the micropores, a porosity of the mesopores and a porosity of the macropores. The porosity of each of the micropores and the mesopores is measured using the BET method, and the porosity of the macropores is measured using the mercury porosimetry.

In addition, when the specific surface area of the porous carbon structure is too small, an area in which silicon may be deposited is reduced, and as a result, a silicon content in the negative-electrode material is reduced. In this case, when the silicon-carbon composition including the same is applied as the negative-electrode material of the secondary battery, it is difficult to achieve a desired capacity of the secondary battery.

On the contrary, when the specific surface area of the porous carbon structure is too large, there is a disadvantage in that the charging/discharging efficiency of the secondary battery is lowered when the silicon-carbon composition including the same is applied as the negative-electrode material for the secondary battery.

In this regard, the specific surface area of the porous carbon structure of the present disclosure may be in a range of, for example, 200 to 1,000$m^2/g$, the specific surface area may be in a range of, for example, 200 to 500$m^2/g$, and the specific surface area may be in a range of, for example, 200 to 300$m^2/g$.

According to an embodiment of the present disclosure, the silicon-carbon composite may satisfy that a span value expressed based on a following Equation 1 may be in a range of 0.8 to 1.2. The span value refers to a distribution of the size of the composite particles. When the span value is out of the above span value range, it means that the sizes of the composite particles are not uniform. In this case, the expansions of the silicon particles across an entire area of the negative electrode are not uniform, which may cause a problem in partial lifespan deterioration. The quality of the composite particles is excellent, so that there may be an advantage of increasing the lifetime retention rate due to the uniform volume expansion of the silicon particles across an entire area of the negative electrode.

$$\text{<Equation 1> Span} = (D_{90}-D_{10})/D_{50}.$$

In the Equation 1, the $D_{10}$ value, the D50 value, and the $D_{90}$ value mean particle size values accounting for 10%, 50%, and 90% in the order of the smallest particle size in the entire particle size distribution of the powders.

According to an embodiment of the present disclosure, a coating layer made of a carbon-based coating material may be formed on a surface of the silicon-carbon composite, if necessary. When the coating layer is formed as described above, the silicon exposed to the outside out of the silicon-carbon composite may be more effectively protected, the particle strength of the silicon-carbon composite may be improved, and the electrical conductivity thereof may be increased, and thus the physical properties required for the silicon-carbon composite may be adjusted. For example, the carbon-based coating material may be thermally decomposed, and then the coating layer may be made of the thermally decomposed carbon-based coating material. The thickness of the coating layer is not particularly limited, but may be in a range of, for example, 1 to 100nm, for example, 5 to 50nm, and for example, 10 to 20nm.

The carbon-based coating material constituting the coating layer may include, for example, at least one selected from the group consisting of a petroleum-based pitch, ethylene, acetylene, methane, ethane, epoxy resin, polyphenol, polyaniline, polyvinyl alcohol, polyvinyl chloride, and other cross-linked polymers, but is not limited thereto. The carbon-based coating layer may be deposited by chemical vapor deposition (CVD) using a carbon source gas including one or more selected from the group consisting of methane gas, ethane gas, propane gas, butane gas, and ethylene gas.

The carbon-based coating material may include a conductive polymer. For example, the conductive polymer may include at least one selected from the group consisting of polyacrylonitrile (PAN), polyaniline, polypyrrole, polyacetylene, polyphenylene, polyphenylene sulfide, polythiophene, poly(fluorene), polypyrene, polyazulene, polynaphthalene, polycarbazole, polyindole, polyazepine, poly(3,4-ethylenedioxythiophene) (PEDOT), poly(p-phenylene sulfide) (PPS), and poly(p-phenylene vinylene) (PPV). However, the present disclosure is not necessarily limited thereto.

A coating scheme for forming the coating layer may include one of coating using chemical vapor deposition (CVD); coating using solution infiltration and subsequent solvent evaporation; coating using solution infiltration and subsequent solvent evaporation and annealing; coating using a sol-gel process; coating using vapor infiltration; coating using melt infiltration; and coating using atomic deposition. However, the present disclosure is not limited thereto.

The present disclosure provides a method for preparing a silicon-carbon composite, and the prepared silicon-carbon composite may satisfy the characteristics of the silicon-carbon composite of the present disclosure as described above.

Specifically, the method for preparing the silicon-carbon composite of the present disclosure may include following (a) to (c).

(a) placing a porous carbon structure into a chemical vapor deposition (CVD) reactor;

(b) supplying silicon-source gas to the CVD reactor, and reacting the silicon-source gas with the porous carbon structure under an atmospheric pressure and a temperature of 400°C to 550°C, thereby depositing silicon particles on the porous carbon structure; and

(c) precipitating a resultant product of the (b) into a solid form to obtain the silicon-carbon composite.

According to an embodiment of the present disclosure, the reactor used in the (a) may be a tube furnace or a rotary tube furnace.

According to an embodiment of the present disclosure, the substrate may be a boat or a sus plate, but is not limited thereto.

According to an embodiment of the present disclosure, in order to control the overall reaction rate and obtain a uniform homogeneous reaction product, the (a) may be performed under a carrier gas atmosphere, which is an inert gas. The carrier gas may include at least one of nitrogen gas or argon gas, but is not necessarily limited thereto.

According to an embodiment of the present disclosure, in order to obtain a uniform Si-C composite by suppressing reactivity of Si radicals generated when the Si-H bond is broken during the homogeneous reaction, hydrogen ($H_2$) gas may be further added to the reactor in the (a). If the hydrogen gas is not added, a significant portion of the pyrolysis product of silicon gas may be concentrated on a front side of the reactor, and the Si distribution may be non-uniform.

In order to satisfy the characteristics, particularly, the crystallinity and grain size characteristics of the silicon particles in the silicon-carbon composite according to an embodiment of the present disclosure, a ratio of contents of the silicon-source gas, the carrier gas, and the hydrogen gas may be adjusted. For example, when a total flow rate of the three types of gases is 1000 sccm, the flow rate of the silicon-source gas may be in a range of 1 to 20 sccm, the content of the carrier gas may be in a range of 400 to 600 sccm, and the content of the hydrogen gas may be in a range of 400 to 600 sccm. However, the present disclosure is not limited thereto.

According to an embodiment of the present disclosure, the silicon-source gas may include at least one selected from a group consisting of monosilane ($SiH_4$) gas, disilane ($Si_2H_6$) gas, monochlorosilane ($SiH_3Cl$) gas, dichlorosilane ($SiH_2Cl_2$) gas, trichlorosilane ($SiHCl_3$) gas, and trimethylsilane ($SiH(CH_3)_3$) gas. However, the present disclosure is not necessarily limited thereto.

According to an embodiment of the present disclosure, the temperature condition of the (b) may be set to perform the homogeneous reaction, and may be in a range of, for example, 400°C to 550°C, for example, 450°C to 500°C. This temperature range may be advantageous in satisfying the characteristics, particularly, the crystallinity and the grain size of the silicon particles in the silicon-carbon composite according to the present disclosure. However, the present disclosure is not necessarily limited thereto.

According to an embodiment of the present disclosure, in the (c), in order to precipitate the resultant product (b) into the solid form, the resultant product (b) may be cooled to room temperature of 23 to 25° C and deposited in a crucible.

According to an embodiment of the present disclosure, after the (c), the method may further comprise forming a coating layer made of a carbon-based coating material on a surface of the obtained silicon-carbon composite.

The coating layer is the same as the coating layer made of the carbon material constituting the coating formed on the surface of the silicon-carbon composite of the present disclosure.

According to an embodiment of the present disclosure, the (d) may be performed using one of: coating using chemical vapor deposition (CVD); coating using solution infiltration and subsequent solvent evaporation; coating using solution infiltration and subsequent solvent evaporation and annealing; coating using a sol-gel process; coating using vapor infiltration; coating using melt infiltration; and coating using atomic deposition. However, the present disclosure is not limited thereto.

According to an embodiment of the present disclosure, in the (d), the carbon-based coating layer may be formed in a chemical vapor deposition (CVD) process using a carbon source gas including at least one selected from a group consisting of methane gas, ethane gas, propane gas, butane gas, acetylene gas, and ethylene gas.

## EXAMPLES

Hereinafter, the present disclosure will be described in more detail with reference to Present Examples and Experimental Examples. However, the following Present Examples and Experimental Examples are merely to describe the present disclosure by way of example, and the contents of the present disclosure are not limited to the following Present Examples and Experimental Examples.

### Present Example 1

Carbon black (carbon black DC3501 of OCI company) and phenolic resin as a binder were mixed with each other in isopropyl alcohol (IPA) in a ratio of "carbon black: binder=65:35 (based on weight)", and then the mixture solution was dried in a spray drying manner to form spherical powder particles. Then, carbonization was performed thereon at a temperature of about 1000°C, and then, the steam activation was performed thereon at a temperature of 950°C to prepare the porous carbon structure. The pore content of the prepared porous carbon structure was micropores: mesopores: macropores=11:37:52 (by volume).

About 5 g of the porous structure was placed on a crucible in a rotary tube furnace as a reaction device, and heated to a temperature of 455°C. Under an atmospheric pressure state and in the reaction device heated to 455°C, a mixture gas of monosilane gas and hydrogen gas (monosilane gas: hydrogen mixture gas=50 sccm:450 sccm) was injected into the reaction device in which a chemical deposition reaction was performed. After the reaction for about 2 hours, the reaction product was cooled to room temperature to obtain about 10 g of the silicon-carbon composite as a gray-black solid deposited on the crucible.

A chemical vapor deposition reaction was performed while flowing a mixture gas of acetylene gas and argon gas (acetylene gas : argon gas ($C_2H_2$ : Ar) = 250sccm : 250sccm) onto the obtained silicon-carbon composite 2g at 455° C for 2 hours to form the carbon coating layer having a thickness of about 10nm on the surface of the silicon-carbon composite, thereby preparing a final silicon-carbon composite.

### Comparative Examples 1 to 3

A silicon-carbon composite was prepared in the same manner as in Present Example 1 except that porous carbon structures having various ratios of contents (vol%) micropores, mesopores, and macropores contained in the porous carbon structure were prepared, respectively. In this regard, the specific ratios of contents thereof are as shown in Table 1 as set forth below.

Specifically, Comparative Example 1 corresponds to a case in which the micropore content is higher, and the macropore content is lower compared to those specified in the present disclosure, and the total porosity is lower than that desired in the present disclosure.

Comparative Example 2 corresponds to a case in which the mesopore content is higher and the macropore content is lower compared to those specified in the present disclosure.

Comparative Example 3 corresponds to a case in which the micropore content is higher and the macropore content is lower compared to those specified in the present disclosure.

**[Table 1]**

| Porous structure | Present Example 1 | Comparative Example 1 | Comparative Example 2 | Comparative Example 3 |
|---|---|---|---|---|
| Structure BET ($m^2/g$) | 860 | 450 | 690 | 550 |
| BET ($cm^3/g$) | 0.57 | 0.24 | 0.82 | 0.61 |
| Mercury porosimetry ($cm^3/g$) | 0.54 | 0.024 | 0.40 | 0.23 |
| Total porosity (BET+ Mercury porosimetry) ($cm^3/g$) | 1.1 | 0.264 | 1.22 | 0.84 |
| Micropores (vol%) | 11.0 | 54.6 | 17.0 | 34.7 |

(continued)

| Porous structure | Present Example 1 | Comparative Example 1 | Comparative Example 2 | Comparative Example 3 |
|---|---|---|---|---|
| Mesopores (vol%) | 37.0 | 39.9 | 50.2 | 37.8 |
| Macropores (vol%) | 52.0 | 5.5 | 32.9 | 27.5 |

In Table 1, 'structure BET' means that the specific surface area of the entirety of the silicon-carbon composite structure is measured.

In Table 1, 'BET' means that the porosity of each of the micropores and mesopores having the average pore size of 50nm or smaller was measured using the BET method.

In Table 1, 'Mercury porosimetry' means that the porosity of macropores having an average pore size exceeding 50nm was measured using the mercury porosimetry.

**Experimental Example 1-XRD Analysis of Silicon Particles**

The silicon particles in the silicon-carbon composite prepared in Present Example 1 were analyzed according to X-ray diffraction analysis (XRD), and a graph as a result of the analysis is shown in FIG. 1.

The grain size of the silicon particle is determined by observing a peak at a point where 2θ(theta) [unit: degree(°)] is 28° in the XRD analysis graph. In addition, when there is no peak in the XRD analysis graph, a type of the measurement target is determined as an amorphous type. When the peak is distributed in a broad manner, a type of the measurement target is interpreted as a mixture of an amorphous type and a crystalline type.

Referring to FIG. 1, since the silicon-carbon composite prepared in Present Example 1 corresponds to a case in which a peak at a point where 2θ is 28° is distributed in the broad manner, it may be determined that the silicon particles are present in a mixture of the amorphous silicon particles and crystalline silicon particles. The average grain size of the crystalline silicon particles calculated by the Scherrer equation (using the XRD analysis data was 1.7 nm.

In Comparative Examples 1 to 3 in which the same silicon source gas and silicon deposition method as those in Present Example 1, as a result of performing XRD analysis, the grain size of the crystalline silicon particles was also measured to be 1.7 nm.

**Experimental Example 2-Half-Cell Test**

Each of the silicon-carbon composites prepared in Present Example 1 and Comparative Examples 1 to 3, respectively, was used as the negative-electrode material. Separately, a conductive carbon black (Super P) and a carbon nanotube conductive material (SWCBT) were mixed (Super P: SWCNT=9:1, weight ratio) with each other to prepare a conductive material. Separately, CMC (sodium salt of carboxymethyl cellulose) and SBR (styrene-butadiene rubber) were mixed with each other (CMC:SBR=3:7, weight ratio) to prepare a binder. The prepared negative-electrode material, conductive material, and binder were mixed with each other using a Thinky-Mixer (negative-electrode material: conductive material: binder=8:1:1, weight ratio) to obtain negative-electrode slurry.

The negative-electrode slurry was applied to a copper foil having a thickness of 18 um, and dried at 80°C for 1 hour. Then, the heat treatment was performed thereon at 100°C in a vacuum oven for 12 hours, and punching was performed thereon so as to have 16mmØ to prepare a negative-electrode plate.

A coin cell was manufactured by combining the prepared negative-electrode plate with Li metal as a counter electrode. Then, electrochemical characteristics of the coin cell was measured. The charging/discharging condition was charging CC/CV: 0.005V/0.005C, discharging CC 1.5V, and the rate was 0.1 C.

Using TOSCAT-3100 equipment as a half-cell test apparatus, the charging and discharging of 20 cycles were executed, and the discharge capacity (mAh/g), the efficiency (%), and the capacity retention rate (CRR) (%) were measured. The measuring results thereof are shown in FIGS. 2 to 4, respectively, and the results are summarized in Table 2 as set forth below.

**[Table 2]**

| | Present | Comparative | Comparative | Comparative |
|---|---|---|---|---|
| | Example 1 | Example 1 | Example 2 | Example 3 |
| Discharge capacity (mAh/g) | 2211 | 1869 | 1906 | 2152 |

(continued)

| | Present Example 1 | Comparative Example 1 | Comparative Example 2 | Comparative Example 3 |
|---|---|---|---|---|
| Efficiency (%) | 91.4% | 87.0% | 85.6% | 88.6% |
| Capacity retention rate (%) | 87.8% | 79.1% | 70.5% | 63.9% |

As shown in Table 2 as set forth above, it was identified that when the silicon-carbon composite of Present Example 1 prepared using the specific porous structure of the present disclosure was used as the negative-electrode material, all of the discharge capacity, the efficiency, and the capacity retention rate were improved compared to Comparative Examples 1 to 3 that did not employ the specific porous structure of the present disclosure.

In addition, referring to the graph of FIG. 3, it may be identified that Comparative Examples 1 to 3 exhibit very unstable results when being applied to a secondary battery because the fluctuation of the efficiency value is great as the number of cycles is repeated. On the contrary, it was identified that in Present Example 1, the reduction in efficiency as the number of cycles increased was smaller than that in each of Comparative Examples 1 to 3, and the secondary battery operated very stably as the number of cycles increased.

Although the embodiments of the present disclosure have been described above in more detail with reference to the accompanying drawings, the present disclosure is not necessarily limited to such embodiments, and may be variously modified within the scope not departing from the technical spirit of the present disclosure. Therefore, the embodiments disclosed in the present disclosure are not for limiting the technical idea of the present disclosure, but for describing the technical idea, and the scope of the technical idea of the present disclosure is not limited by these embodiments. Therefore, it should be understood that the embodiments described above are merely examples in all aspects and the present disclosure are not limited thereto. The scope of protection of the present disclosure should be interpreted by the claims, and all technical ideas within the scope equivalent thereto should be interpreted as being included in the scope of the rights of the present disclosure.

## Claims

**1.** A silicon-carbon composite comprising silicon particles and a porous carbon structure,

wherein each of the silicon particles is present in an amorphous phase or in an amorphous-crystalline mixed phase,
wherein an average grain size of the crystalline silicon particles is 10nm or smaller,
wherein the porous carbon structure contains micropores, mesopores, and macropores defined therein,
wherein the micropores are contained in an amount of 10 to 30 vol%, based on 100 vol% of a total pore volume of the porous carbon structure,
wherein the mesopores are contained in an amount of 20 to 40 vol%, based on 100 vol% of a total pore volume of the porous carbon structure,
wherein the macropores are contained in an amount of 40 to 60 vol%, based on 100 vol% of a total pore volume of the porous carbon structure.

**2.** The silicon-carbon composite of claim 1, wherein a total porosity of the porous carbon structure is in a range of 0.6 to 1.5 $cm^3/g$.

**3.** The silicon-carbon composite of claim 1, wherein a specific surface area of the porous carbon structure is in a range of 200 to 1,000 $m^2/g$.

**4.** The silicon-carbon composite of claim 1, wherein the silicon particles have an average particle size of 1 to 100nm, wherein the silicon-carbon composite particles have an average particle size of 4 to 8 $\mu$m.

**5.** The silicon-carbon composite of claim 1, wherein the porous carbon structure is made of carbon black or a mixture of carbon black and a binder.

**6.** The silicon-carbon composite of claim 5, wherein the binder includes at least one of a phenolic resin, a coal tar pitch, or a polyacrylonitrile.

**7.** The silicon-carbon composite of claim 5, wherein the porous carbon structure is made of the mixture of the carbon black and the binder,
wherein when a total weight of the mixture is 100% by weight, the carbon black is contained in an amount of 40 to 70% by weight, and the binder is contained in an amount of 30 to 60% by weight.

**8.** The silicon-carbon composite of claim 1, wherein a coating layer made of a carbon-based coating material is formed on a surface of the silicon-carbon composite.

**9.** The silicon-carbon composite of claim 1, wherein when a total weight of the silicon-carbon composite is 100 wt%, a content of the silicon particles contained in the silicon-carbon composite is in a range of 40 to 80 wt%.

**10.** The silicon-carbon composite of claim 1, wherein the silicon-carbon composite satisfies that a span value expressed based on a following Equation 1 is in a range of 0.8 to 1.2:

$$\text{<Equation 1> Span} = (D_{90}-D_{10})/D_{50}.$$

**11.** A negative-electrode material for a secondary battery, the negative-electrode material comprising the silicon-carbon composite according to one of claims 1 to 10.

**12.** A method for preparing the silicon-carbon composite according to one of claims 1 to 10, the method comprising:

(a) placing a porous carbon structure into a chemical vapor deposition (CVD) reactor;
(b) supplying silicon-source gas to the CVD reactor, and reacting the silicon-source gas with the porous carbon structure under an atmospheric pressure and a temperature of 400°C to 550°C, thereby depositing silicon particles on the porous carbon structure; and
(c) precipitating a resultant product of the (b) into a solid form to obtain the silicon-carbon composite.

**13.** The method for preparing the silicon-carbon composite of claim 12, wherein the (a) is performed under a carrier gas atmosphere,
wherein the carrier gas includes at least one of nitrogen gas or argon gas.

**14.** The method for preparing the silicon-carbon composite of claim 12, wherein hydrogen ($H_2$) gas is further input to the CVD reactor in the (a).

**15.** The method for preparing the silicon-carbon composite of claim 12, wherein the silicon-source gas includes at least one selected from a group consisting of monosilane ($SiH_4$) gas, disilane ($Si_2H_6$) gas, monochlorosilane ($SiH_3Cl$) gas, dichlorosilane ($SiH_2Cl_2$) gas, trichlorosilane ($SiHCl_3$) gas, and trimethylsilane ($SiH(CH_3)_3$) gas.

**16.** The method for preparing the silicon-carbon composite of claim 12, wherein the method further comprises, after the (c), (d) forming a coating layer made of a carbon-based coating material on a surface of the obtained silicon-carbon composite.

**17.** The method for preparing the silicon-carbon composite of claim 16, wherein the (d) is performed using one of:

coating using chemical vapor deposition (CVD);
coating using solution infiltration and subsequent solvent evaporation;
coating using solution infiltration and subsequent solvent evaporation and annealing;
coating using a sol-gel process;
coating using vapor infiltration;
coating using melt infiltration; and
coating using atomic deposition.

**18.** The method for preparing the silicon-carbon composite of claim 17, wherein in the (d), the carbon-based coating layer is formed in a chemical vapor deposition (CVD) process using a carbon source gas including at least one selected from a group consisting of methane gas, ethane gas, propane gas, butane gas, acetylene gas, and ethylene gas.

FIG. 1

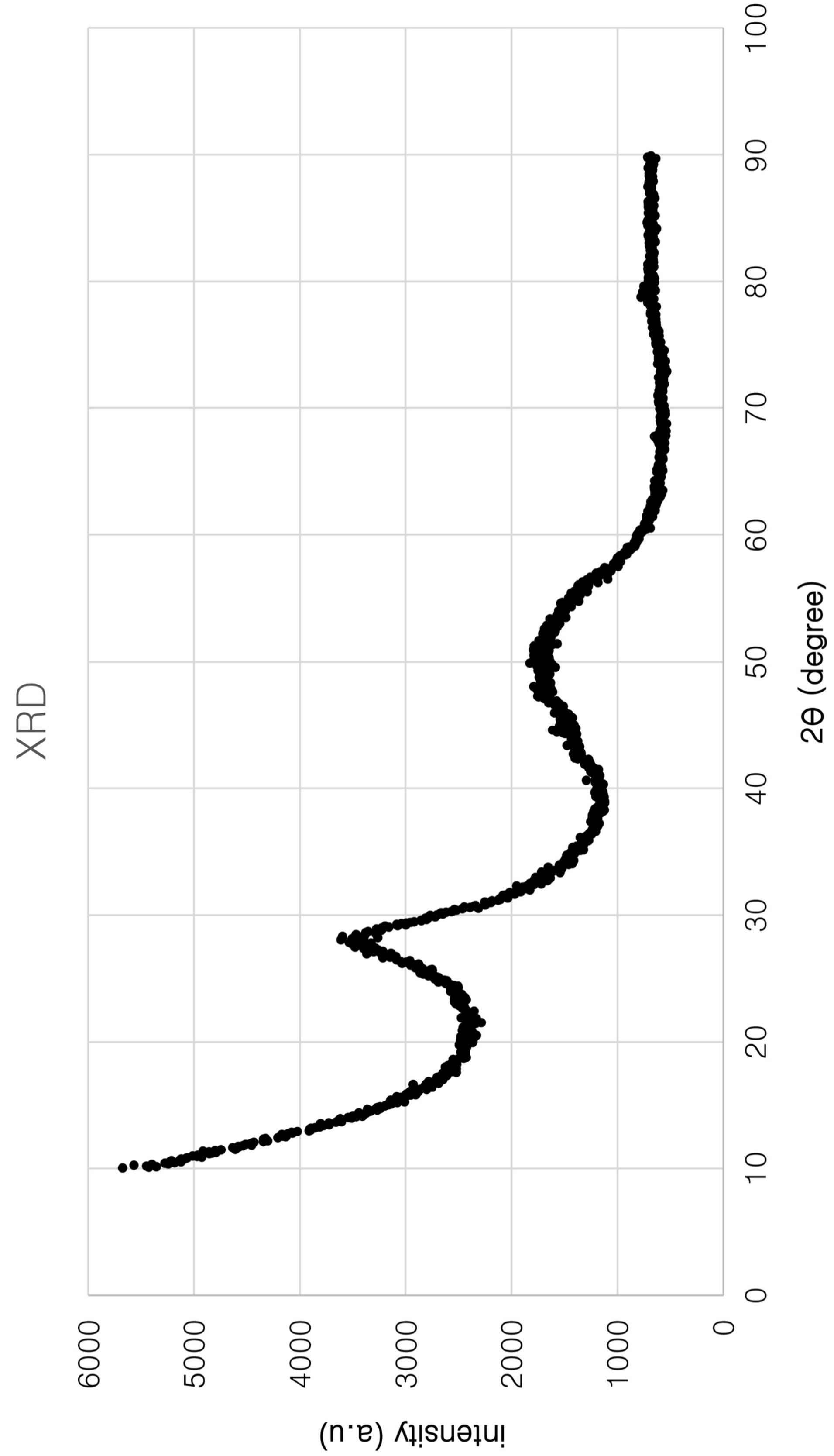
XRD
intensity (a.u)
2θ (degree)
0
1000
2000
3000
4000
5000
6000
0
10
20
30
40
50
60
70
80
90
100

FIG. 2

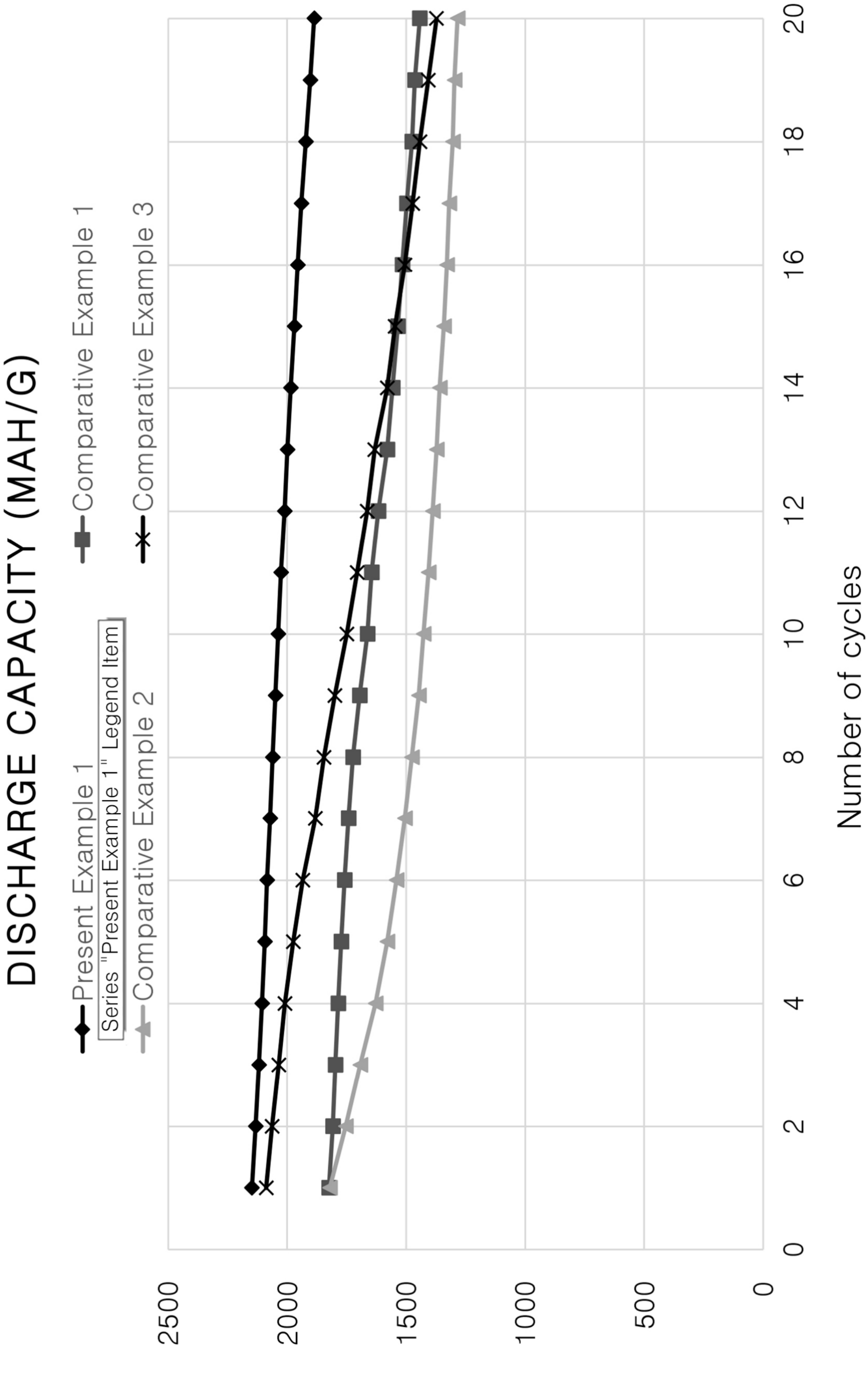
DISCHARGE CAPACITY (MAH/G)
Present Example 1
Series "Present Example 1" Legend Item
Comparative Example 1
Comparative Example 2
Comparative Example 3
2500
2000
1500
1000
500
0
0
2
4
6
8
10
12
14
16
18
20
Number of cycles

FIG. 3

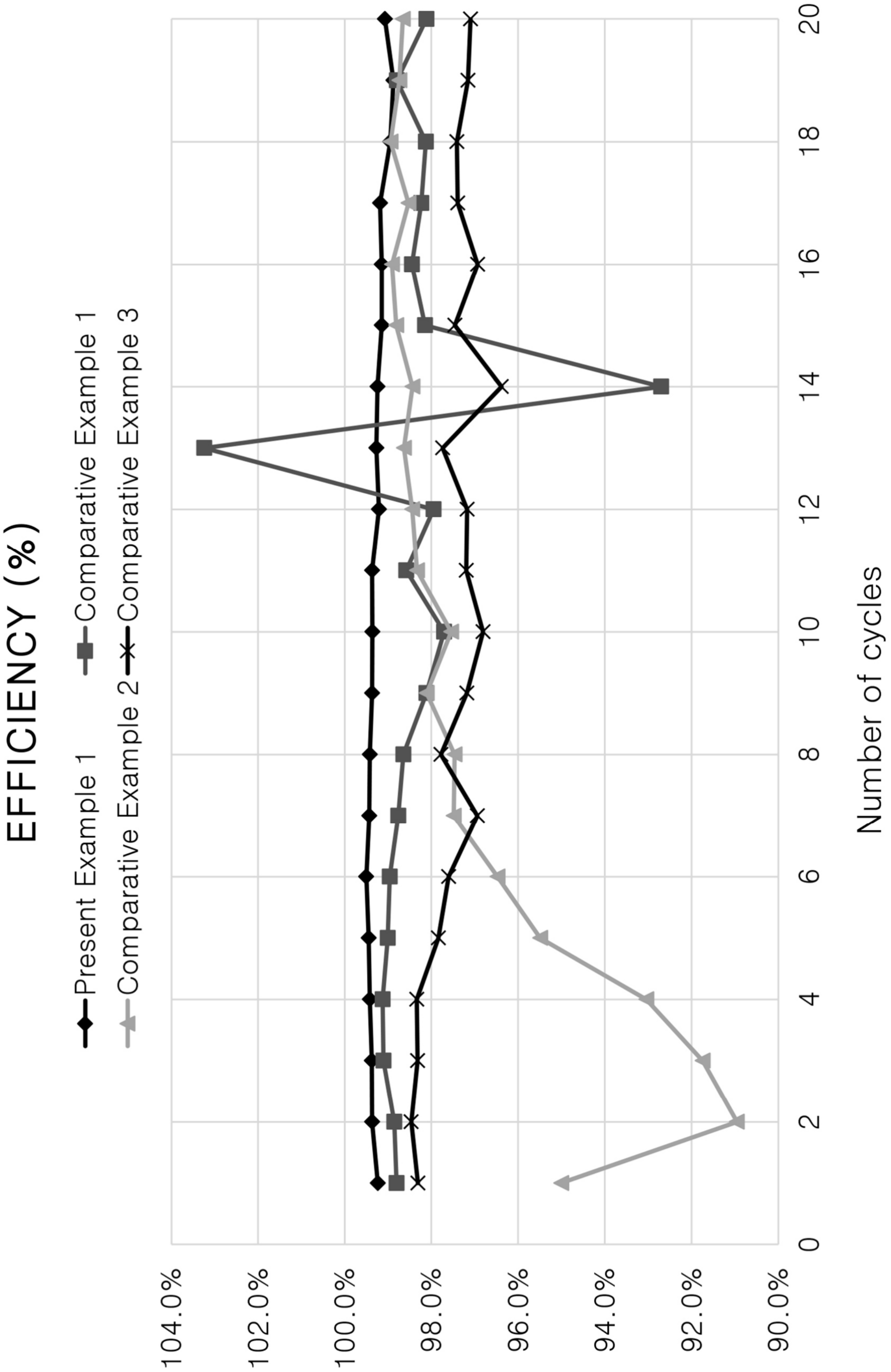
EFFICIENCY (%)
Present Example 1
Comparative Example 1
Comparative Example 2
Comparative Example 3
104.0%
102.0%
100.0%
98.0%
96.0%
94.0%
92.0%
90.0%
0
2
4
6
8
10
12
14
16
18
20
Number of cycles

FIG. 4

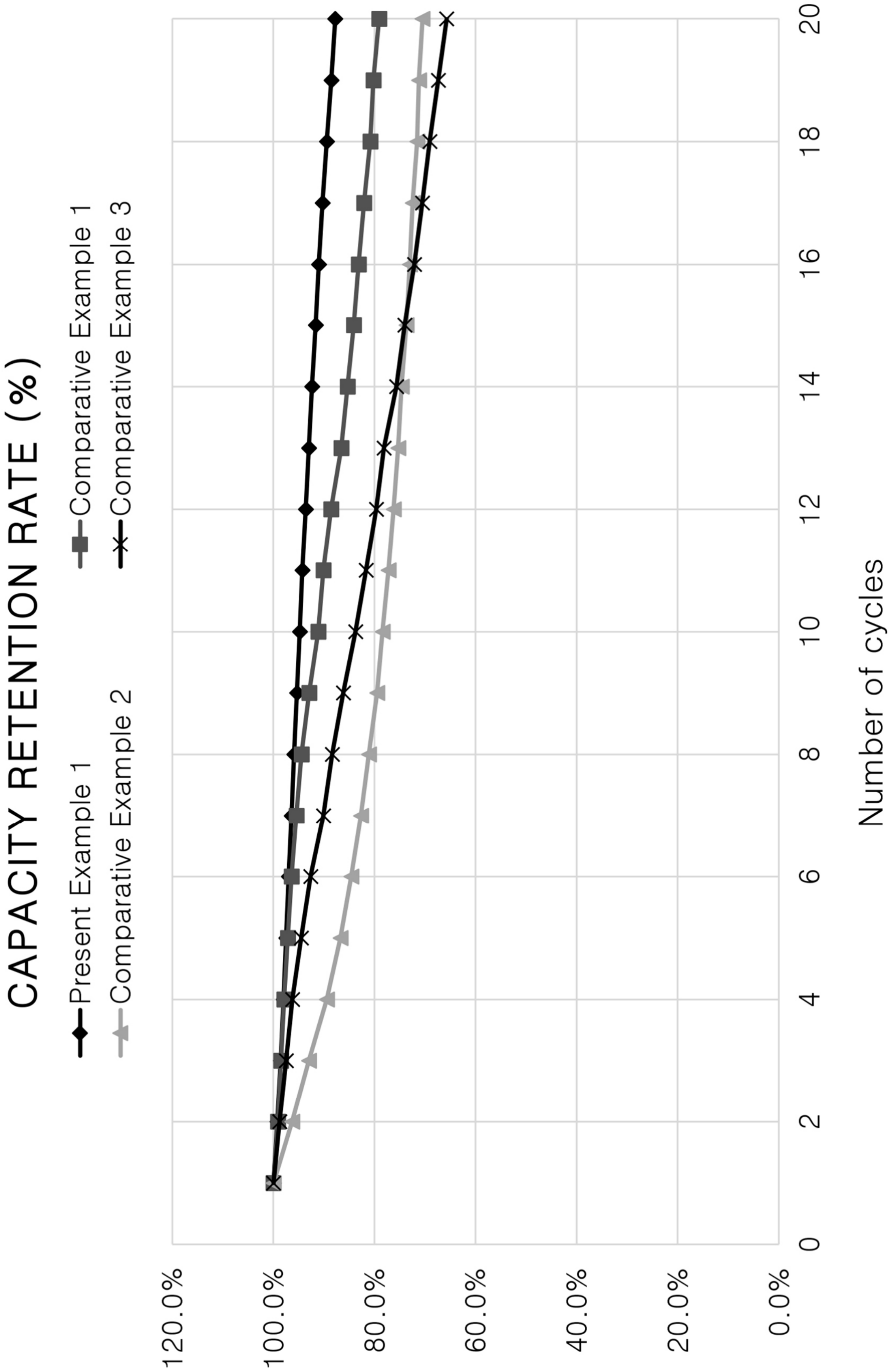
CAPACITY RETENTION RATE (%)
Present Example 1
Comparative Example 1
Comparative Example 2
Comparative Example 3
120.0%
100.0%
80.0%
60.0%
40.0%
20.0%
0.0%
0
2
4
6
8
10
12
14
16
18
20
Number of cycles

# INTERNATIONAL SEARCH REPORT

International application No. **PCT/KR2024/005837**

## A. CLASSIFICATION OF SUBJECT MATTER

**C01B 32/372**(2017.01)i; **C01B 32/318**(2017.01)i; **C01B 32/33**(2017.01)i; **C01B 33/035**(2006.01)i; **H01M 4/36**(2006.01)i; **H01M 4/38**(2006.01)i; **H01M 4/587**(2010.01)i; **H01M 4/62**(2006.01)i

According to International Patent Classification (IPC) or to both national classification and IPC

## B. FIELDS SEARCHED

Minimum documentation searched (classification system followed by classification symbols)

C01B 32/372(2017.01); C01B 32/05(2017.01); H01M 10/052(2010.01); H01M 4/04(2006.01); H01M 4/36(2006.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘 입자(silicon particle), 다공성 탄소(porous carbon), 실리콘-탄소 복합체 (silicon-carbon composite), 마이크로기공(micropore), 메조기공(mesopore), 매크로기공(macropore), 이차전지용 음극재 (negative material for secondary battery)

## C. DOCUMENTS CONSIDERED TO BE RELEVANT

| Category* | Citation of document, with indication, where appropriate, of the relevant passages | Relevant to claim No. |
|---|---|---|
| A | CN 115995542 A (GANZHOU LITAN NEW ENERGY TECHNOLOGY CO., LTD.) 21 April 2023 (2023-04-21)<br>See claims 1-10; and paragraphs [0020]-[0051]. | 1-18 |
| A | KR 10-2022-0128594 A (SK ON CO., LTD.) 21 September 2022 (2022-09-21)<br>See entire document. | 1-18 |
| A | KR 10-2022-0067595 A (DAE JOO ELECTRONIC MATERIALS CO., LTD.) 25 May 2022 (2022-05-25)<br>See entire document. | 1-18 |
| A | WO 2017-052281 A1 (LG CHEM, LTD. et al.) 30 March 2017 (2017-03-30)<br>See entire document. | 1-18 |

☑ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 August 2024** | **13 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/005837

C. DOCUMENTS CONSIDERED TO BE RELEVANT

| Category* | Citation of document, with indication, where appropriate, of the relevant passages | Relevant to claim No. |
|---|---|---|
| A | US 2014-0349186 A1 (APPLIED SCIENCES, INC.) 27 November 2014 (2014-11-27)<br>See entire document. | 1-18 |

Form PCT/ISA/210 (second sheet) (July 2022)

**INTERNATIONAL SEARCH REPORT**
**Information on patent family members**

International application No.
**PCT/KR2024/005837**

| Patent document cited in search report | | | Publication date (day/month/year) | Patent family member(s) | | | Publication date (day/month/year) |
|---|---|---|---|---|---|---|---|
| CN | 115995542 | A | 21 April 2023 | None | | | |
| KR | 10-2022-0128594 | A | 21 September 2022 | CN | 115084459 | A | 20 September 2022 |
| | | | | EP | 4057391 | A2 | 14 September 2022 |
| | | | | EP | 4057391 | A3 | 28 September 2022 |
| | | | | US | 11862800 | B2 | 02 January 2024 |
| | | | | US | 2022-0293945 | A1 | 15 September 2022 |
| | | | | US | 2024-0088389 | A1 | 14 March 2024 |
| KR | 10-2022-0067595 | A | 25 May 2022 | CN | 116711097 | A | 05 September 2023 |
| | | | | KR | 10-2590190 | B1 | 19 October 2023 |
| | | | | US | 2024-0010503 | A1 | 11 January 2024 |
| | | | | WO | 2022-103053 | A1 | 19 May 2022 |
| WO | 2017-052281 | A1 | 30 March 2017 | CN | 107636867 | A | 26 January 2018 |
| | | | | CN | 107636867 | B | 02 April 2021 |
| | | | | EP | 3355389 | A1 | 01 August 2018 |
| | | | | EP | 3355389 | A4 | 01 August 2018 |
| | | | | EP | 3355389 | B1 | 30 December 2020 |
| | | | | JP | 2018-523898 | A | 23 August 2018 |
| | | | | JP | 6727667 | B2 | 22 July 2020 |
| | | | | KR | 10-1981609 | B1 | 24 May 2019 |
| | | | | KR | 10-2017-0036381 | A | 03 April 2017 |
| | | | | US | 11837717 | B2 | 05 December 2023 |
| | | | | US | 2018-0151874 | A1 | 31 May 2018 |
| | | | | US | 2022-0255069 | A1 | 11 August 2022 |
| US | 2014-0349186 | A1 | 27 November 2014 | EP | 2162564 | A2 | 17 March 2010 |
| | | | | JP | 2010-525549 | A | 22 July 2010 |
| | | | | US | 2008-0261116 | A1 | 23 October 2008 |
| | | | | US | 8828481 | B2 | 09 September 2014 |
| | | | | WO | 2009-009206 | A2 | 15 January 2009 |
| | | | | WO | 2009-009206 | A3 | 30 April 2009 |

Form PCT/ISA/210 (patent family annex) (July 2022)